Europäisches Patentamt

**European Patent Office**

**Office européen des brevets**

(11) Publication number: **0 041 219**
**B1**

(12) **EUROPEAN PATENT SPECIFICATION**

(45) Date of publication of patent specification: **02.01.85**

(21) Application number: **81104044.3**

(22) Date of filing: **26.05.81**

(51) Int. Cl.⁴: **B 60 S 11/00**

(30) Priority: **29.05.80 JP 72049/80**

(43) Date of publication of application:
**09.12.81 Bulletin 81/49**

(45) Publication of the grant of the patent:
**02.01.85 Bulletin 85/01**

(84) Designated Contracting States:
**DE FR GB**

(56) References cited:
**DE-B-1 177 499**
**DE-U-7 200 980**
**JP-Y-50 039 541**

(73) Proprietor: **NISSAN MOTOR COMPANY,
LIMITED**
**No.2, Takara-cho, Kanagawa-ku**
**Yokohama-shi Kanagawa-ken 221 (JP)**

(72) Inventor: **Hirabayashi, Hirokazu**
**32-16, Nishikamata 4-chome Ota-ku**
**Tokyo (JP)**
Inventor: **Tomioka, Hirotaka**
**12-12, Chiyogaoka 7-chome, Tama-ku**
**Kawasaki-shi, Kanagawa-ken (JP)**
Inventor: **Yamagata, Shuji**
**910, Ichinosawa-cho Asahi-ku**
**Yokohama-shi Kanagawa-ken (JP)**

(74) Representative: **Patentanwälte Grünecker, Dr.
Kinkeldey, Dr. Stockmair, Dr. Schumann, Jakob,
Dr. Bezold, Meister, Hilgers, Dr. Meyer-Plath**
**Maximilianstrasse 58**
**D-8000 München 22 (DE)**

(54) **Jacking point structure.**

Courier Press, Leamington Spa, England.

## Description

The invention relates to a jacking point structure of an automotive vehicle, comprising a bracket fixed to the underside of a rear portion of the automotive vehicle, the bracket having a jacking point at a central portion of the bracket.

In case of repairs or the like, a garage jack or other jacks are used in order to jack up both rear wheels of an automotive vehicle. As a jacking point, a variety of suspension parts have been used.

For instance, in vehicles in which an engine is provided at a front portion of the vehicle and the rear wheels thereof are driven, a banjo or a casing for a differential gear is used as a jacking point.

In vehicles wherein an engine is provided at a front portion of the vehicle and the front wheels thereof are driven, including four-wheels independent suspension means, no proper suspension part can be provided as a jacking point. Thus, it is required to provide additionally a special jacking point.

A conventional jacking point structure as mentioned above is disclosed in JP—Y—50—39541. A projection is formed on the underside of a rear portion of a vehicle body to constitute a jacking point. Further, a hole is formed laterally in the projection to constitute a hook for pulling the vehicle.

Also, it is proposed that a hook for pulling the vehicle is welded so as to project downwardly from the underside of a rear portion of the vehicle body. In this case, such a hook is used also as a jacking point.

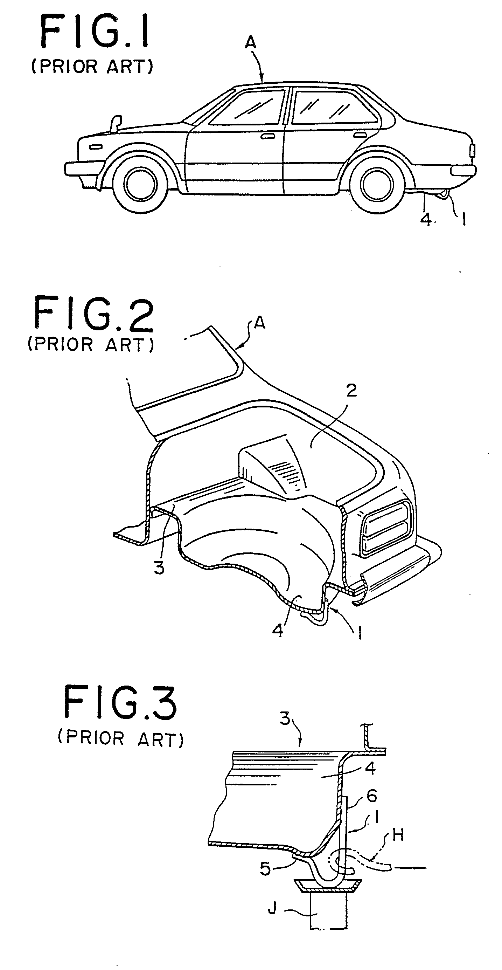

Figs. 1 to 3 show such a conventional jacking point. A hook 1 for pulling an automotive vehicle A is welded to the underside of a rear portion of the vehicle as a jacking point. In general, the hook 1 is fixed to the rear end of a spare tire housing 4 formed at a floor 3 of a trunk compartment or room 2 positioned at a rear portion of the vehicle body.

The hook 1 is formed of a U-shaped bar with a circular section. As shown in Fig. 3, one end 5 of the hook 1 is welded to the bottom of the spare tire housing 4 in the longitudinal direction of the vehicle body while the other end 6 thereof is vertically welded to the back side of the spare tire housing 4. The curved portion of the hook 1 which is used as a jacking point projects downwardly from the underside of the vehicle body. A jack J engages the curved portion of the hook 1.

In such a jacking point structure, however, the width or thickness in a lateral direction of the hook 1 is narrow or small so that the stability in case of jacking up is low. As the hook 1 projects downwardly, when another hook H pulls the hook 1 in the direction shown by the arrow in Fig. 3, that is, in the backward direction of the vehicle, a moment occurs at the welded portions of the ends 5, 6 of the hook 1 so that there is a possibility that the welded portions may be broken.

Also, the hook 1 must have a large space enough to receive fixedly another hook or rope. Thus, the hook 1 projects downwardly to a large extent, for instance, by 60—70 mm from the underside of the vehicle body, so that the bottom of the hook 1 can easily contact the ground particularly when the vehicle runs on a rough road. If a reinforcing member is added in order to increase the strength of the welded portions between the spare tire housing and the hook 1, the hook 1 projects downwardly to an extremely large extent.

The invention as claimed is intended to solve the problem of how to provide a jacking point structure of an automotive vehicle wherein a jacking point and a hook for pulling the vehicle are compactly arranged.

A jacking point structure of an automotive vehicle according to the invention is characterized in that a hook having a pair of legs is welded to the bracket on opposite sides of the bracket and a curved portion of the hook is projecting backwardly from the automotive vehicle.

The jacking point structure according to the invention allows a construction wherein the hook can be prevented from contacting the ground. Since the curved portion of the hook projects backwardly from an automotive vehicle it is possible to form a large trunk compartment. A high strength can be achieved for the hook for pulling the vehicle.

One preferred embodiment of the invention is characterised in that the hook is formed in a U-shape.

Embodiments for carrying out the invention are described in detail below with reference to drawings, in which:

Fig. 1 shows a conventional automotive vehicle equipped with a prior art jacking point structure;

Fig. 2 is a schematic view showing, partly broken for clarity, a rear portion of the vehicle as shown in Fig. 1;

Fig. 3 is a sectional view showing an essential portion of the rear portion as shown in Fig. 2;

Fig. 4 is a sectional view showing a rear portion of an automotive vehicle equipped with a jacking point structure according to an embodiment of the present invention;

Fig. 5 is a perspective view showing a bracket and a hook used in the jacking point structure as shown in Fig. 4;

Fig. 6 is a sectional view taken along the line VI—VI in Fig. 4;

Fig. 7 is a bottom view of the bracket and the hook as shown in Fig. 5;

Fig. 8 is a side view showing a jacking point structure according to a further embodiment of the present invention; and

Fig. 9 is a bottom view showing an essential portion of the jacking point structure as shown in Fig. 8.

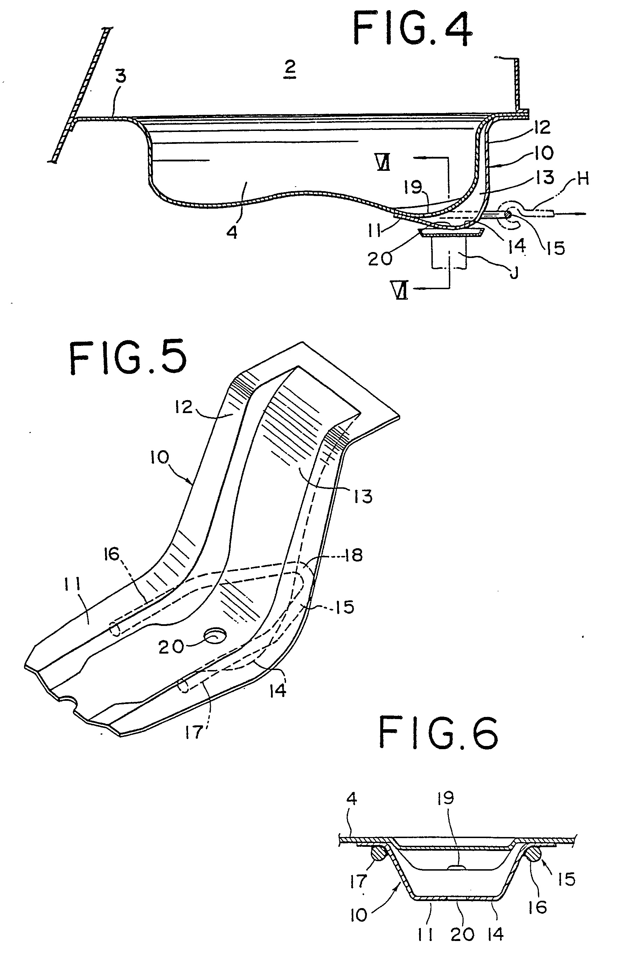

Referring now to Fig. 4, a bracket 10 is fixed to the underside of a rear portion of an automotive vehicle, for instance, a rear portion of a spare tire housing 4 of a recessed shape formed in a floor panel 3 of a trunk room or compartment 2.

As shown in Figs. 4 and 5, the bracket 10 may be formed in an L-shape in section, including a first wall 11 fixed to the bottom of the spare tire housing 4 and a second wall 12 fixed to the back side thereof. Also, the bracket 10 includes a channel portion 13 which is formed from the first wall 11 to the second wall 12. The deepest portion of the channel portion 13 is positioned at the rear end of the first wall 11. The deepest portion of the channel portion 13 is so formed that a small space is provided between the channel portion 13 and the spare tire housing 4. Thus, the deepest portion of the channel portion 13 constitutes a jacking point 14 for a jack J. In other words, the jack J engages the jacking point 14 at the deepest portion of the channel portion 13.

The jacking point 14 of the bracket 10 only slightly projects downwardly from the spare tire housing 4. In another mode of the present invention, the jacking point 14 or the deepest portion of the channel portion 13 may be set substantially at the same level of the bottom of the spare tire housing 4.

Both legs or ends 16, 17 of a U-shaped hook 15 for pulling the vehicle are welded on the underside of the first wall 11 of the bracket 10 in such a manner that the channel portion 13 is held between the legs 16, 17 of the hook 15. The hook 15 is preferably formed of a bar having a circular section as shown in Figs. 5 to 7. A curved portion 18 of the hook 15 projects horizontally in the backward direction of the vehicle.

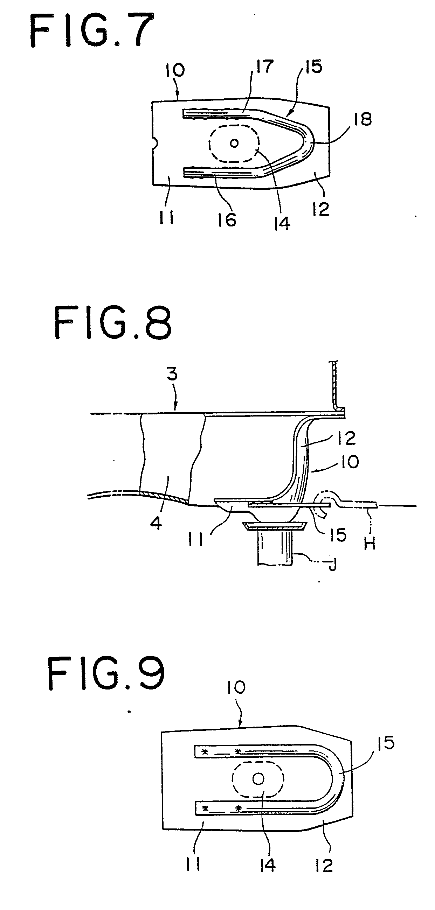

The hook 15 may be formed of other shapes or members than a bar. For example, as shown in Figs. 8 and 9, the hook 15 may be formed of a plate-like member spot-welded to the underside of the bracket 10.

Referring again to Figs. 4 and 6, a drain hole 19 formed in the bottom of the spare tire housing 4 is covered by the bracket 10 so that the bracket 10 can function as a splash guard. Splash can be prevented from entering through the drain hole 19 into the trunk compartment. A drain hole 20 formed in the bracket 10 at the deepest point or jacking point 14 is shifted from the drain hole 19 so that those drain holes 19 and 20 do not align.

Figs. 4 and 8 show a condition in which the jack J is actuated to jack up the rear portion of the vehicle by lifting up the jacking point 14.

According to the present invention, the jacking point may have a wide flat portion so that the head of the jack J can stably engage the jacking point. Thus, safe workability can be increased.

As the hook 15 projects backwardly and not downwardly, the hook 15 can be easily prevented from contacting the ground. Also, the inner space of the trunk compartment can be increased because the trunk floor panel can be set at a low level.

When the vehicle is pulled by having the hook 15 engage another hook H in the direction of the arrows in Figs. 4 and 8, the welded portions of the legs 16, 17 of the hook 15 receive shearing force rather than moment. As well-known, the welded portions have a good resistance against shearing force. For such a reason, the strength of the welded portions according to the present invention is increased as compared with the prior art.

The jacking point 14 is located in a space between the legs 16, 17 of the hook 15 under the vehicle body. Thus, such a space can be effectively utilized.

The height of the hook and the bracket in combination can be lower than that of the prior art so that repairs or the like of members under the rear portion of the vehicle can be easily done. A departure angle can be large.

**Claims**

1. A jacking point structure of an automotive vehicle, comprising a bracket (10) fixed to the underside of a rear portion (3) of the automotive vehicle, the bracket having a jacking point (14) at a central portion of the bracket, characterized in that a hook (15) having a pair of legs (16, 17) is welded to the bracket (10) on opposite sides of the bracket (10), and a curved portion (18) of the hook (15) is projecting backwardly from the automotive vehicle.

2. A jacking point structure of claim 1, characterized in that the hook (15) is formed in a U-shape.

3. A jacking point structure according to claim 1 or 2, characterized in that the central portion (14) of the bracket is located between the legs (16, 17) of the hook (15).

4. A jacking point structure according to any one of the claims 1 to 3, characterized in that the bracket (10) is formed in substantially an L-shape in a vertical section and includes a first wall (11) extending horizontally, a second wall (12) extending vertically and a channel portion (13) formed from the first wall to the second wall at the center of the bracket.

5. A jacking point structure according to claim 4, characterized in that the channel portion (13) of the bracket is located between the legs (16, 17) of the hook (15).

6. A jacking point structure according to any one of the claims 1 to 5, characterized in that the bracket (10) is fixed to the underside of the spare tire housing (4) of a recessed shape formed in the bottom of the trunk compartment (2) at the rear portion thereof.

7. A jacking point structure according to any one of the claims 4 to 6, characterized in that the legs (16, 17) of the hook (15) are welded to the first wall (11) in such a manner, that the channel portion (13) of the bracket (10) is held between the legs of the hook, the hook (15) extending horizontally in the backward direction of the vehicle body.

8. A jacking point structure according to any of the claims 5 to 7, characterized in that jacking point (14) is positioned on the underside of the channel portion (13) at the rear end of the first wall (11).

9. A jacking point structure according to any one of the claims 1 to 8, characterized in that the bracket (10) is fixed to the spare tire housing (4) of the trunk compartment (2) in such a manner that a small space (13) is formed between the bracket (10) and the spare tire housing (4), and wherein a drain hole (19) formed in the bottom of the spare tire housing (4) is shifted from a drain hole (20) formed in the deepest portion of the channel portion of the bracket whereby the bracket (10) can function as a splash guard.

## Revendications

1. Construction de support de cric d'un véhicule automobile du type comprenant une potence (10) fixé en partie basse d'une partie arrière (3) d'un véhicule automobile, ladite potence ayant un support de cric (14) en sa partie centrale, caractérisé en ce que en crochet (15) ayant une paire de branches (16, 17) est soudé à ladite potence (10) sur les côtés opposés de celle-ci, et une partie recourbée (18) du crochet (15) s'étend vers le bas depuis le véhicule automobile.

2. Construction selon la revendication 1, caractérisée en ce que le crochet (15) a la forme d'un U.

3. Construction selon la revendication 1 ou 2, caractérisée en ce que la partie centrale (14) de la potence (10) précitée est située entre les branches (16, 17) du crochet (15) précité.

4. Construction selon l'une quelconque des revendications 1 à 3, caractérisée en ce que la potence (10) est formée substantiellement en forme de L dans une section verticale et comprend une première paroi (11) s'étendant horizontalement, une seconde paroi (12) s'étendant verticalement et une partie formant canal (13) formée depuis ladite première paroi jusqu'à ladite seconde paroi au centre de ladite potence.

5. Construction selon la revendication 4, caractérisée en ce que la partie formant canal (13) précitée de la potence précitée est située entre les branches (16, 17) du crochet (15).

6. Construction selon l'une des revendications 1 à 5, caractérisée en ce que la potence (10) précitée est fixée à la partie basse d'un logement de roue de secours (4) d'un évidement formé au fond d'un compartiment tronqué (2) á la partie arrière de celui-ci.

7. Construction selon l'une des revendications 4 à 6, caractérisée en ce que les branches (16, 17) précitées du crochet (15) sont soudées à la première paroi (11) précitée de telle façon que, la partie formant canal (13) de la potence (10) soit retenue entre lesdites branches dudit crochet, ledit crochet (15) s'étendant horizontalement dans une direction vers l'arrière du corps du véhicule.

8. Construction selon l'une des revendications 5 à 7, caractérisée en ce que le support de cric (14) est situé sous la partie formant canal (13) à l'extrémité arrière de la première paroi (11).

9. Construction selon l'une des revendications 1 à 8, caractérisée en ce que la potence (10) est fixée au logement de roue de secours (4) d'un compartiment tronqu (2) de telle façon qu'un petit espace (13) est formé entre la potence (10) et le logement de roue de secours (4), et où un trou formant drain (19) formé dans le fond dudit logement de roue de secours (4) est décalé d'un trou formant drain (20) formé dans la partie la plus profonde de la partie formant canal de ladite potence et où ladite potence (10) a la fonction d'un garde-boue.

## Patentansprüche

1. Wagenheberansatzpunktkonstruktion bei einem Kraftfahrzeug, mit einem an der Unterseite eines rückwärtigen Bereiches (3) des Kraftfahrzeuges befestigten Träger (10), wobei der Träger in einem mittleren Bereich des Trägers einen Wagenheberansatzpunkt aufweist, dadurch gekennzeichnet, daß ein ein Paar Arme (16, 17) aufweistender Haken (15) an gegenüberliegenden Seiten des Trägers (10) an den Träger (10) angeschweißt ist und daß ein gekrümmter Abschnitt (18) des Hakens (15) nach rückwärts von dem Kraftfahrzeug hervorsteht.

2. Wagenheberansatzpunktkonstruktion nach Anspruch 1, dadurch gekennzeichnet, daß der Haken (15) U-förmig geformt ist.

3. Wagenheberansatzpunktkonstruktion nach Anspruch 1 oder 2, dadurch gekennzeichnet, daß sich der mittlere Bereich (14) des Trägers zwischen den Armen (16, 17) des Hakens (15) befindet.

4. Wagenheberansatzpunktkonstruktion nach einem der Ansprüche 1 bis 3, dadurch gekennzeichnet, daß der Träger (10) mit einem im wesentlichen L-förmigen, senkrechten Schnitt ausgebildet ist und eine erste, sich horizontal erstreckende Wand (11) eine zweite, sich vertikal erstreckende Wand (12) und einen Rinnenabschnitt (13) aufweist, der sich von der ersten Wand zur zweiten Wand in der Mitte des Trägers erstreckt.

5. Wagenheberansatzpunktkonstruktion nach Anspruch 4, dadurch gekennzeichnet, daß sich der Rinnenabschnitt (13) des Trägers zwischen den Armen (16, 17) des Hakens (15) befindet.

6. Wagenheberansatzpunktkonstuktion nach einem der Ansprüche 1 bis 5, dadurch gekennzeichnet, daß der Träger (10) an der Unterseite der Reserveradwanne (4) befestigt ist, welche in ausgenommener Form im Boden des Kofferraumes (2) in einem rückwärtigen Bereich desselben ausgebildet ist.

7. Wagenheberansatzpunktkonstruktion nach einem der Ansprüche 4 bis 6, dadurch gekennzeichnet, daß die Arme (16, 17) des Hakens (15) an der ersten Wand (11) derart angeschweißt sind, daß der Rinnenabschnitt (13) des Trägers (10) zwischen den Armen des Hakens gehalten ist, wobei sich der Haken (15) horizontal in Rückwärtsrichtung des Kraftfahrzeugchassis erstreckt.

8. Wagenheberansatzpunktkonstruktion nach einem der Ansprüche 5 bis 7, dadurch gekennzeichnet, daß der Wagenheberansatzpunkt (14) an der Unterseite des Rinnenabschnittes (13) am rückwärtigen Ende der ersten Wand (11) positioniert ist.

9. Wagenheberansatzpunktkonstruktion nach einem der Ansprüche 1 bis 8, dadurch gekennzeichnet, daß der Träger (10) an dem Reserveradgehäuse (4) des Kofferraumes (2) derart befestigt ist, daß ein schmaler Raum (13) zwischen dem Träger (10) und dem Reserveradgehäuse (4) gebildet ist, und daß eine in dem Boden des Reserveradgehäuses (4) ausgebildete Abflußöffnung (19) gegenüber einer Abflußöffnung (20) versetzt ist, die in dem tiefsten Bereich des Rinnenabschnittes des Trägers ausgebildet ist, wodurch der Träger (10) die Funktion eines Spritzschutzes hat.

# FIG.1
(PRIOR ART)

# FIG.2
(PRIOR ART)

# FIG.3
(PRIOR ART)

# FIG.4

# FIG.5

# FIG.6

2

# FIG.7

# FIG.8

# FIG.9